# EUROPÄISCHE PATENTSCHRIFT

(11) **EP 2 598 365 B1**
(45) Veröffentlichungstag und Bekanntmachung des Hinweises auf die Patenterteilung: **12.12.2018**
(21) Anmeldenummer: 11723470.8
(22) Anmeldetag: 06.06.2011
(51) Int. Cl.: B60L 3/00, H01M 10/44, B60L 11/18

(54) **VERFAHREN UND VORRICHTUNG ZUR AKTIVIERUNG VON MINDESTENS EINER ENERGIEMANAGEMENTFUNKTION IN EINEM FAHRZEUG**
METHOD AND APPARATUS FOR ACTIVATION OF AT LEAST ONE ENERGY MANAGEMENT FUNCTION IN A VEHICLE
PROCEDE ET APPAREIL D'ACTIVATION D'AU MOINS UNE FONCTION DE CONTROL DE L'ÉNERGIE DANS UN VÉHICULE

(30) Priorität: 28.07.2010 DE 102010038515
(43) Veröffentlichungstag der Anmeldung: 05.06.2013
(73) Patentinhaber: Robert Bosch GmbH, 70442 Stuttgart (DE)
(72) Erfinder: KOENIGSMANN, Martin Holger, 70197 Stuttgart (DE)
(86) Internationale Anmeldenummer: PCT/EP2011/059278
(87) Internationale Veröffentlichungsnummer: WO 2012/013403

(56) Entgegenhaltungen:
- EP-A2- 0 902 520
- DE-A1- 10 002 848
- DE-A1-102007 061 130

## Beschreibung

### Stand der Technik

Die Erfindung geht aus von einem Verfahren zur Aktivierung von mindestens einer Energiemanagementfunktion in einem Fahrzeug nach der Gattung des unabhängigen Patentanspruchs 1 sowie von einer zugehörigen Vorrichtung, einem Computerprogrammprodukt und einem Datenverarbeitungsprogramm zur Durchführung des Verfahrens zur Aktivierung von mindestens einer Energiemanagementfunktion in einem Fahrzeug.

Es stehen verschiedene Strategien zur Verfügung, um den Kraftstoffverbrauch und damit den CO2 -Ausstoß oder die Fahrdynamik von Fahrzeugen zu verbessern, angefangen bei Start-Stopp-Strategien, intelligenter Generatorregelung und Rekuperation im normalen 12V-Brodnetz bis hin zu verschiedenen Hybridvarianten mit unterschiedlich starker Elektrifizierung und einer zusätzlichen Hochvoltbatterie. Am Ende dieser Kette stehen reine Elektrofahrzeuge (EV) oder Fahrzeuge mit Brennstoffzellenantrieb, welche auch über einen Akkumulator als Energiespeicher verfügen. Diesen unterschiedlichen Konzepten ist gemein, dass ein Energiemanagement zum sicheren Betrieb erforderlich ist. Dieses Energiemanagement benötigt möglichst genaue Informationen über den aktuellen Zustand der verwendeten Akkumulatoren bzw. Batterien. Bei aus dem Stand der Technik bekannten Systemen werden diese Informationen mit Hilfe von Batteriesensoren und einer Batteriezustandserkennung ermittelt.

Die unterschiedlichen Energiemanagementfunktionen können nur zuverlässig funktionieren, wenn der aktuelle Batteriezustand mit einer bestimmten Genauigkeit bekannt ist. Das ist aber nicht immer der Fall. So kann beispielsweise nach einem Resetvorgang der Batteriezustandserkennung bzw. des Energiemanagements oder nach einem Batteriewechsel der aktuelle Batteriezustand im Fahrzeug nicht mit einer bestimmten Genauigkeit angegeben werden. In diesen Fällen muss der Zustand der Batterie erst von der Batteriezustandserkennung ermittelt werden. Diese Lernvorgänge erfordern bestimmte Bedingungen, z.B. Ruhephasen von bestimmter Dauer und eine gewisse Zeitdauer. Während dieser Wartezeit können verschiedene Energiemanagementfunktionen wie beispielsweise eine Start-Stopp-Funktion oder eine Rekuperationfunktion nicht aktiviert werden. Als Folge kann das Fahrzeug mehr Kraftstoff verbrauchen und/oder einen erhöhten Schadstoffausstoß aufweisen.

In der Patentschrift EP 1 271 170 B1 werden ein Verfahren und eine Vorrichtung zur Batteriezustandserkennung beschrieben. Das beschriebene Verfahren verwendet bei einem fehlerhaften Betrieb oder bei einem Ausfall eines ersten Batteriezustandserkennungssystems Aussagen über den Batteriezustand eines zweiten Batteriezustandserkennungssystems. Hierbei macht das erste Batteriezustandserkennungssystem Aussagen über den aktuellen Batteriezustand unter Verwendung einer Spannungsmessung, einer Strommessung und einer Temperaturmessung, während das zweite Batteriezustandserkennungssystem Aussagen über den aktuellen Batteriezustand nur unter Verwendung einer Spannungsmessung macht.

In der Offenlegungsschrift DE 10 2004 004 172 A1 werden ein Verfahren und eine Vorrichtung zum Erkennen einer defekten Batterie oder eines batterielosen Zustands mittels einer Strommessung beschrieben. Das beschriebene Verfahren erkennt einen Fehlerzustand der Batterie durch Auswerten des Batteriestroms und/oder der Welligkeit des Batteriestroms.

In der Offenlegungsschrift DE 10 2007 061 130 A1 werden ein Verfahren und eine Vorrichtung zur Überwachung einer elektrischen Energiespeichereinrichtung beschrieben. Das beschriebene Verfahren und ein Produktionsartikel zur Überwachung einer elektrischen Energiespeichereinrichtung, die angepasst ist, um einen selektiv betätigbaren Elektromotor mit elektrischer Energie zu versorgen, umfassen ein Ermitteln eines Ladezustands und einer Temperatur der elektrischen Energiespeichereinrichtung im Anschluss an eine Stabilisierungsperiode und ein Messen eines minimalen Spannungsausgangs der elektrischen Energie-speichereinrichtung während einer selektiven Betätigung des Elektromotors. Einer von mehreren vorbestimmten Schwellenwertspannungszuständen wird auf der Grundlage des Ladezustands und der Temperatur gewählt. Die minimale Spannung wird mit der gewählten vorbestimmten Schwellenwertspannung verglichen.

In der Offenlegungsschrift DE 100 02 848 A1 wird eine Vorrichtung zur Erfassung der Restladung einer Batterie beschrieben. Die beschriebene Vorrichtung umfasst einen Stromdetektor zum Erfassen einer elektrischen Stromausgabe von der Batterie und eines elektrischen Ladestroms zu der Batterie, einen Spannungsdetektor zum Erfassen einer Ausgangsspannung von der Batterie, einen Tiefpassfilter zum Filtern der Ergebnisse der Erfassung durch den Stromdetektor und den Spannungsdetektor, einen Zeitkonstantenänderer zum Ändern der Zeitkonstante des Tiefpassfilters einen Integrator zum Berechnen der Restladung der Batterie durch Integrieren des Ergebnisses der Erfassung durch den Stromdetektor, einen Schwellenwertrechner zum Berechnen eines Schwellenspannungswerts entsprechend einem spezifischen Wert der Restladung auf der Basis des von dem Filter gefilterten elektrischen Stromwerts, einen Komparator zum Vergleichen des vom Schwellenspannungsrechner berechneten Schwellenspannungswerts mit dem vom Filter gefilterten Spannungswert und einen Rücksetzer zum Rücksetzen der Restladung auf den spezifischen Wert, wenn der gefilterte Spannungswert den Schwellenspannungswert überschreitet.

### Offenbarung

Das erfindungsgemäße Verfahren zur Aktivierung von mindestens einer Energiemanagementfunktion in einem Fahrzeug bzw. die erfindungsgemäße Vorrichtung zur Aktivierung von mindestens einer Energiemanagementfunktion in einem Fahrzeug mit den Merkmalen der unabhängigen Patentansprüche 1 bzw. 8 weisen demgegenüber den Vorteil auf, dass unterschiedliche Energiemanagementfunktionen wie eine Start-Stopp-Funktion, eine intelligente Generatorregelung, eine Rekuperationfunktion und/oder eine Unterstützung im Beschleunigungsfall (Boost) früher als heute üblich aktiviert werden können. Dadurch kann die oben genannte Wartezeit nach dem Neuanklemmen der Batterie, d.h. nach einem Resetvorgang und/oder einem Batteriewechsel bis zur Aktivierung der mindestens einen Energiemanagementfunktion beliebig reduziert werden. Im besten Fall kann die mindestens eine Energiemanagementfunktion direkt nach einem Resetvorgang und/oder einem Batteriewechsel aktiviert werden. Hierdurch können die Verbrauchs- und Schadstoffwerte des Fahrzeugs in solchen Situationen in vorteilhafter Weise verbessert bzw. reduziert werden. Außerdem kann durch eine schnellere Aktivierung solcher Energiemanagementfunktionen ein für den Kunden direkt erfahrbarer Wettbewerbsvorteil umgesetzt werden.

Der Grundgedanke besteht darin, Energiemanagementfunktionen zu aktivieren, bevor die benötigte Genauigkeit der Batteriezustandserkennung erreicht ist. Dies kann beispielsweise nach einem Resetvorgang von Steuergeräten und/oder einem Batteriewechsel passieren. Durch Ausführungsformen der vorliegenden Erfindung können alle Energiemanagementfunktionen beeinflusst werden, die dem Fachmann heute bekannt sind, wie beispielsweise intelligente Generatorregelung, Rekuperation, Unterstützung im Beschleunigungsfall (Boost). In einer besonders bevorzugten Ausführungsform betrifft sie die schnelle Aktivierung der Start-Stopp- Funktion. Des Weiteren können Ausführungsformen der vorliegenden Erfindung in allen bekannten Fahrzeugtypen wie z.B. Hybridfahrzeuge mit einem oder mehreren Akkumulatoren, Brennstoffzellenfahrzeuge und Elektrofahrzeuge eingesetzt werden. Eine besonders bevorzugte Ausführungsform betrifft klassische Fahrzeuge mit einem 12V-Bordnetz.

Die frühzeitige Aktivierung von Energiemanagementfunktionen wie die Start-Stopp-Funktion wird über ein zweigeteiltes Energiemanagement realisiert. So lange nur ungenaue Daten aus der Batteriezustandserkennung vorliegen, werden einfache Abfragen mit erhöhten Grenzwerten als zusätzlichen Sicherheitspuffer verwendet. Zur vorzeitigen Aktivierung von mindestens einer Energiemanagementfunktion können Spannungsmessungen zu Ermittlung einer Batterie- und Bordnetzspannung verwendet werden, welche üblicherweise immer zur Verfügung stehen, um kritische Spannungsschwellen zu vermeiden und kritische Spannungseinbrüche zu erkennen. Zudem kann eine Stromintegration, welche üblicherweise ebenfalls immer zur Verfügung steht, verwendet werden, um ein zu starkes Entladen der Batterie zu verhindern bzw. eine positive Ladebilanz sicherzustellen. Des Weiteren kann nach einem Resetvorgang auf Basis der gemessen Ruhespannung ein Ladezustand der Batterie als Startwert abgeschätzt werden. Außerdem kann der Ladestrom bzw. eine Ladeakzeptanz der Batterie ermittelt werden, welche vom Ladezustand und der Temperatur abhängig sind. Eine stär-ker entladene Batterie verfügt über eine größere Ladeakzeptanz als eine Batterie mit einem höheren Ladezustand. Für jeden Batterietyp und jede Fahrzeugarchitektur können hier entsprechende Grenzwerte definiert werden, um einen zu tiefen und für die mindestens eine Energiemanagementfunktion kritischen Ladezustand zu vermeiden. Tritt zu Beginn der Fahrt nach dem Resetvorgang ein starker Entlade- oder Ladehub auf, beispielsweise durch einen Motorstart, dann kann ein aktueller Innenwiderstand der Batterie bestimmt werden. Für diesen Innenwiderstand können anwendungsabhängige Grenzwerte bestimmt werden und es kann eine Spannungsprädiktion durchgeführt werden. Durch eine Auswertung dieser oder einiger dieser Parameter und/oder Signale können Energiemanagementfunktionen wie beispielsweise eine Start-Stopp-Funktion zuverlässig realisiert werden. Da mit ungenaueren Werten gearbeitet wird, kann die Verfügbarkeit bestimmter Energiemanagementfunktionen, wie beispielsweise der Start-Stopp-Funktion, unter Umständen im Verhältnis zum normalen Energiemanagement eingeschränkt werden, beispielsweise durch kürzere Stopp-Phasen.
Wenn dann im Anschluss die notwendigen Lernbedingungen zum Erreichen einer erhöhten Genauigkeit der Batteriezustandserkennung erfüllt worden sind, kann auf das normale Hauptenergiemanagement umgeschaltet werden, welches dem aus dem Stand der Technik bekannten Energiemanagement entspricht.

Durch ein Verfahren zur Aktivierung von mindestens einer Energiemanagementfunktion in einem Fahrzeug in Abhängigkeit vom aktuellen Zustand einer Batterie wird mindestens ein Parameter zur Bestimmung des aktuellen Zustands der Batterie erfasst und/oder ermittelt, wobei die Gültigkeit der Werte des mindestens einen erfassten und/oder ermittelten Parameters durch eine Zustandsvariable repräsentiert wird, welche nach einem Resetvorgang und/oder Batteriewechsel auf einen Grundzustand eingestellt wird und in Abhängigkeit von vorgegebenen Kriterien von dem Grundzustand in einen Setzzustand verändert wird, wobei ein Hauptenergiemanagement die mindestens eine Energiemanagementfunktion nur aktiviert, wenn die Zustandsvariable den Setzzustand aufweist und der mindestens eine erfasste und/oder ermittelte Parameter einen korrespondierenden Hauptgrenzwert erreicht und/oder eine korrespondierende Hauptbedingung erfüllt. Erfindungsgemäß ist ein Notenergiemanagement vorgesehen, welches die mindestens eine Energiemanagementfunktion nur aktiviert, wenn die Zustandsvariable den Grundzustand aufweist und der mindestens eine erfasste und/oder ermittelte Parameter einen korrespondierenden Notgrenzwert erreicht und/oder eine korrespondierende Notbedingung erfüllt, wobei die Notgrenzwerte höher als die Hauptgrenzwerte vorgegeben werden.

Eine Vorrichtung zur Aktivierung von mindestens einer Energiemanagementfunktion in einem Fahrzeug in Abhängigkeit vom aktuellen Zustand einer Batterie umfasst mindestens einen Batteriesensor, welcher mindestens einen Parameter zur Bestimmung des aktuellen Zustands der Batterie erfasst und/oder ermittelt, und eine Auswerte- und Steuereinheit, welche die Gültigkeit der Werte des mindestens einen erfassten und/oder ermittelten Parameters durch Auswerten einer Zustandsvariablen ermittelt, welche nach einem Resetvorgang und/oder Batteriewechsel auf einen Grundzustand einstellbar ist und in Abhängigkeit von vorgegebenen Kriterien von dem Grundzustand in einen Setzzustand veränderbar ist, wobei die Auswerte- und Steuereinheit ein Hauptenergiemanagement ausführt und die mindestens eine Energiemanagementfunktion nur aktiviert, wenn die Zustandsvariable den Setzzustand aufweist und der mindestens eine erfasste und/oder ermittelte Parameter einen korrespondierenden Hauptgrenzwert erreicht und/oder eine korrespondierende Hauptbedingung erfüllt. Erfindungsgemäß führt die Auswerte- und Steuereinheit ein Notenergiemanagement aus, welches die mindestens eine Energiemanagementfunktion nur aktiviert, wenn die Zustandsvariable den Grundzustand aufweist und der mindestens eine erfasste und/oder ermittelte Parameter einen korrespondierenden Notgrenzwert erreicht und/oder eine korrespondierende Notbedingung erfüllt, wobei die Notgrenzwerte höher als die Hauptgrenzwerte vorgegeben. Unter der Auswerte- und Steuereinheit kann vorliegend ein elektrisches Gerät, das beispielsweise Teil eines Steuergeräts, insbesondere eines Batteriesteuergeräts ist, verstanden werden, welches erfasste Sensorsignale verarbeitet bzw. auswertet. Die Auswerte- und Steuereinheit kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Auswerte- und Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Das Notenergiemanagement bezeichnet ein Energiemanagement, welches nach einem Resetvorgang und/oder einem Batteriewechsel mit Hilfe von nur ungenauen Notgrenzwerten und/oder Notbedingungen die mindestens eine Energiemanagementfunktion realisieren kann. Das Hauptenergiemanagement bezeichnet ein Energiemanagement, welches erst nach erfolgter Lernphase auf Grundlage von genauen Hauptwerten und/oder Hauptbedingungen die mindestens eine Energiemanagementfunktion regelt.

Die Vorrichtung ist zur Ausführung von Schritten des oben genannten Verfahrens und eines Computerprogramms zur Steuerung von Schritten des vorstehend genannten Verfahrens ausgebildet, wenn das Computerprogramm von der Vorrichtung ausgeführt wird. Unter der Vorrichtung kann vorliegend ein elektrisches Gerät, wie beispielsweise ein Steuergerät verstanden werden, welches erfasste Sensorsignale verarbeitet bzw. auswertet. Die Vorrichtung kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der beschriebenen Ausführungsformen verwendet wird, wenn das Programm auf der Vorrichtung ausgeführt wird.

Durch die in den abhängigen Ansprüchen 2-7, 9 und 10 aufgeführten Maßnahmen und Weiterbildungen sind vorteilhafte Verbesserungen des im unabhängigen Patentanspruch 1 angegebenen Verfahrens zur Aktivierung von mindestens einer Energiemanagementfunktion in einem Fahrzeug möglich.
Besonders vorteilhaft ist, dass die vorgegebenen Kriterien zum Verändern der Zustandsvariablen mindestens eine Ruhephase mit einer vorgegebenen Zeitdauer und/oder eine vorgegebene Wartezeitspanne umfassen.

In vorteilhafter Ausgestaltung des Verfahrens schätzt das Notenergiemanagement einen aktuellen Ladezustand der Batterie durch Auswerten einer gemessenen Ruhespannung ab und/oder ermittelt einen aktuellen Innenwiderstand der Batterie nach einem starken Entlade- und/oder Ladehub während eines Kaltstarts und vergleicht den aktuellen Ladezustand und/oder den ermittelten aktuellen Innenwiderstand mit korrespondierenden Notgrenzwerten. Auf Grundlage des aktuellen Ladezustand der Batterie und dem aktuellen Innenwiderstand der Batterie kann das Notenergiemanagement eine Spannungsprädiktion durchführen, wobei das Notenergiemanagement die mindestens eine Energiemanagementfunktion aktiviert, wenn ein prognostizierter Spannungseinbruch der Batterie in einem zukünftigen Szenario einen vorgegebenen korrespondierenden Notgrenzwert unterschreitet. Des Weiteren kann das Notenergiemanagement einen aktuellen Ladestrom auswerteten und mit einem korrespondierenden Notgrenzwert vergleichen. Auf Grundlage des aktuellen Ladestroms kann das Notenergiemanagement eine Ladebilanz der Batterie ermitteln und auswerten, wobei das Notenergiemanagement die mindestens eine Energiemanagementfunktion aktiviert, wenn eine positive Ladebilanz ermittelt wird. Außerdem kann das Notenergiemanagement die mindestens eine Energiemanagementfunktion mit eingeschränktem Funktionsumfang aktivieren.

Zusammenfassend kombinieren Ausführungsformen der vorliegenden Erfindung zwei unterschiedliche Energiemanagementstrategien zur schnellen Aktivierung von Energiemanagementfunktionen, so dass auch die Start-Stopp-Funktion trotz der ungenauen Datenlage zuverlässig gegen Liegenbleiber im Feld realisiert werden kann.

Ausführungsformen der Erfindung sind in den Zeichnungen dargestellt und werden in der nachfolgenden Beschreibung näher erläutert.

### Kurze Beschreibung der Zeichnungen

Fig. 1 zeigt ein schematisches Blockdiagramm eines Ausführungsbeispiels einer Anordnung zur Aktivierung von mindestens einer Energiemanagementfunktion in einem Fahrzeug.
Fig. 2 bis 4 zeigen ein Flussdiagramm eines Ausführungsbeispiels eines Verfahrens zur Aktivierung von mindestens einer Energiemanagementfunktion in einem Fahrzeug.

### Ausführungsformen der Erfindung

Bekannte Energiemanagementsysteme verwenden von einem elektronischen Batteriesensor erfasste und/oder ermittelte Parameter bzw. Signale erst dann zur Batteriezustandserkennung, wenn eine spezifizierte Genauigkeit erreicht ist. Auf Basis dieser Genauigkeit werden Grenzwerte im Energiemanagement definiert, durch welche Energiemanagementfunktionen wie z.B. eine Start-Stopp-Funktion aktiviert und deaktiviert werden können. Als mögliche Parameter bzw. Signale zur Batteriezustandserkennung können beispielsweise Ladezustand (SOC: State of Charge) Innenwiderstand (Ri), Alterung (SOH: State of Health) der Batterie ermittelt und ausgewertet werden. Eine entscheidende Bedeutung kommt hierbei den so genannten Prädiktoren des elektronischen Batteriesensors zu, denn diese geben dem Energiemanagement unter anderem eine Aussage darüber, ob der Ladezustand der Batterie (State of Charge, SOC) hoch genug ist, und der zu erwartende Spannungseinbruch beim nächsten Start (State of Function, SOF) nicht zu tief ist, so dass in Summe die Startfähigkeit des Fahrzeugs sichergestellt ist. Trifft eine der Bedingungen nicht zu, so darf das Energiemanagement eine automatische Abschaltung durch die Start-Stopp-Funktion nicht zulassen.

Die Prädiktoren des elektronischen Batteriesensors werden in der Regel über komplexe interne Algorithmen berechnet. Die zu erwartende Genauigkeit der Prädiktoren kann durch eine korrespondierende Zustandsvariablen angezeigt werden. So repräsentiert beispielsweise ein Grundzustand der korrespondierenden Zustandsvariablen, dass ein ermittelter aktuellen Wert, welcher beispielsweise für den Ladezustand ermittelt wurde, noch starken Schwankungen unterworfen ist und damit noch deutliche Abweichungen vom tatsächlichen Wert aufweisen kann. Ein Setzzustand der korrespondierenden Zustandsvariablen repräsentiert hingegen, dass der ermittelte aktuelle Wert ausreichend genau ist, um eine gültige Aussage über den aktuellen Zustand der Batterie abzuleiten. In der Regel ist eine Ruhephase von mehreren Stunden nach dem Anklemmen einer Batterie bzw. nach einem Resetvorgang erforderlich, bis die vom elektronischen Batteriesensor ermittelten bzw. erfassten Werte "sicher" sind und damit für das Energiemanagement verwendet werden können.

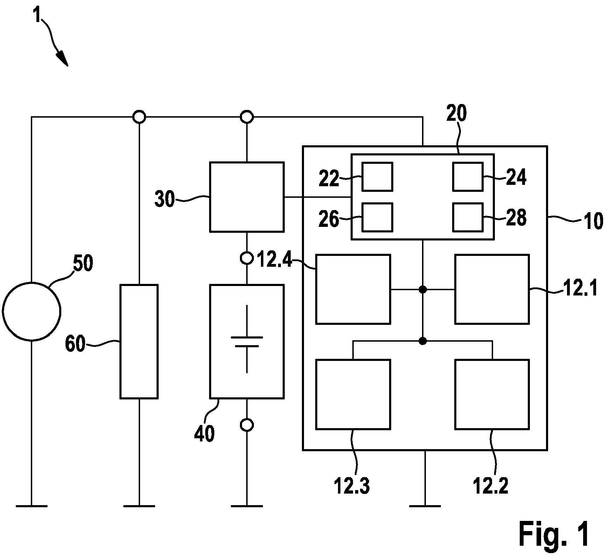

Wie aus Fig. 1 ersichtlich ist, umfasst ein Bordnetz 1 eines Fahrzeugs eine Batterie 40, einen Generator 50 und eine Vielzahl von Verbrauchern, von denen stellvertretend ein Verbraucher 60 dargestellt ist. Für ein Energiemanagement im Fahrzeug ist ein Steuergerät 10 mit einer Auswerte- und Steuereinheit 20 vorgesehen, welches über mindestens einen Batteriesensor 30 mindestens einen Parameter zur Bestimmung des aktuellen Zustands der Batterie 40 erfasst und/oder ermittelt, um in Abhängigkeit vom aktuellen Zustand der Batterie 40 mindestens eine Energiemanagementfunktion 12.1, 12.2, 12.3, 12.4 im Fahrzeug zu aktivieren, wobei die Auswerte- und Steuereinheit 20 die Gültigkeit der Werte des mindestens einen erfassten und/oder ermittelten Parameters durch Auswerten einer Zustandsvariablen 24 ermittelt, welche nach einem Resetvorgang und/oder Batteriewechsel auf einen Grundzustand einstellbar ist und in Abhängigkeit von vorgegebenen Kriterien von dem Grundzustand in einen Setzzustand veränderbar ist. Die mindestens eine Energiemanagementfunktion umfasst beispielsweise eine Start-Stopp-Funktion 12.1, eine intelligente Generatorregelung 12.2, eine Rekuperationfunktion 12.3 und/oder eine Unterstützung im Beschleunigungsfall (Boost-Funktion) 12.4. Die Auswerte- und Steuereinheit 20 führt ein Hauptenergiemanagement 22 aus, welches die mindestens eine Energiemanagementfunktion 12.1 bis 12.4 nur aktiviert, wenn die Zustandsvariable 24 den Setzzustand aufweist und der mindestens eine erfasste und/oder ermittelte Parameter einen korrespondierenden Hauptgrenzwert erreicht und/oder eine korrespondierende Hauptbedingung erfüllt ist.

Die Auswerte- und Steuereinheit 20 führt ein Notenergiemanagement 26 aus, welches die mindestens eine Energiemanagementfunktion 12.1 bis 12.4 nur aktiviert, wenn die Zustandsvariable 24 den Grundzustand aufweist und der mindestens eine erfasste und/oder ermittelte Parameter einen korrespondierenden Notgrenzwert erreicht und/oder eine korrespondierende Notbedingung erfüllt, wobei die Notgrenzwerte höher als die Hauptgrenzwerte und/oder die Notbedingungen einfacher überprüfbar als die Hauptbedingungen vorgegeben sind. Zur Speicherung der Notgrenzwerte, Hauptgrenzwerte, Notbedingungen bzw. Notabfragen und Hauptbedingungen bzw. Hauptabfragen umfasst die Auswerte- und Steuereinheit einen Speicher 28.

Das Verfahren ermittelt zur Aktivierung von mindestens einer Energiemanagementfunktion 12.1 bis 12.4 in einem Fahrzeug einen aktuellen Zustand der Batterie 40, wobei mindestens ein Parameter zur Bestimmung des aktuellen Zustands der Batterie 40 erfasst und/oder ermittelt wird, wobei die Gültigkeit der Werte des mindestens einen erfassten und/oder ermittelten Parameters durch eine Zustandsvariable 24 repräsentiert wird, welche nach einem Resetvorgang und/oder Batteriewechsel auf einen Grundzustand eingestellt wird und in Abhängigkeit von vorgegebenen Kriterien von dem Grundzustand in einen Setzzustand verändert wird, wobei das Hauptenergiemanagement 22 die mindestens eine Energiemanagementfunktion 12.1 bis 12.4 nur aktiviert, wenn die Zustandsvariable 24 den Setzzustand aufweist und der mindestens eine erfasste und/oder ermittelte Parameter einen korrespondierenden Hauptgrenzwert erreicht und/oder eine korrespondierende Hauptbedingung erfüllt.

Es ist ein Notenergiemanagement 26 vorgesehen, welches die mindestens eine Energiemanagementfunktion 12.1 bis 12.4 nur aktiviert, wenn die Zustandsvariable 24 den Grundzustand aufweist und der mindestens eine erfasste und/oder ermittelte Parameter einen korrespondierenden Notgrenzwert erreicht und/oder eine korrespondierende Notbedingung erfüllt, wobei die Notgrenzwerte höher als die Hauptgrenzwerte und/oder die Notbedingungen einfacher überprüfbar als die Hauptbedingungen vorgegeben werden.

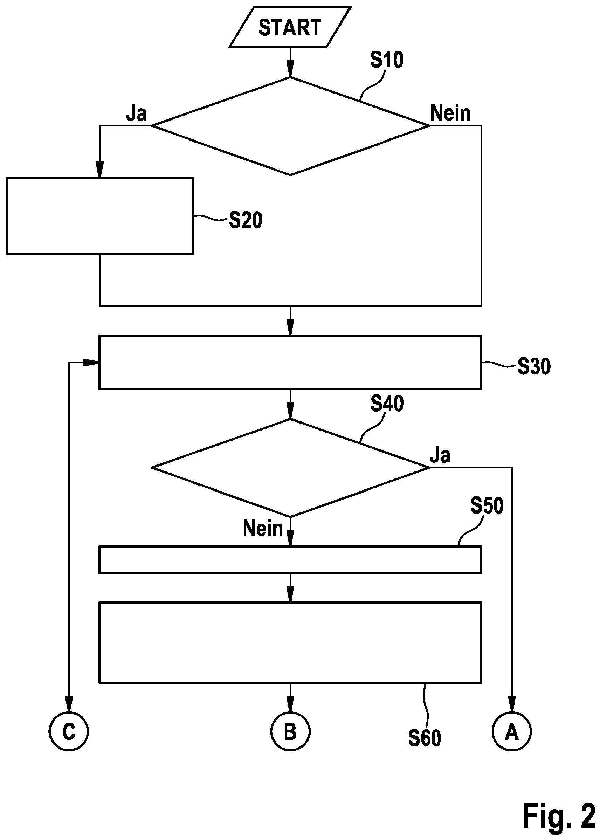

Nachfolgend wird unter Bezugnahme auf Fig. 2 bis 4 ein Ausführungsbeispiel des erfindungsgemäßen Verfahrens ausführlich beschrieben.

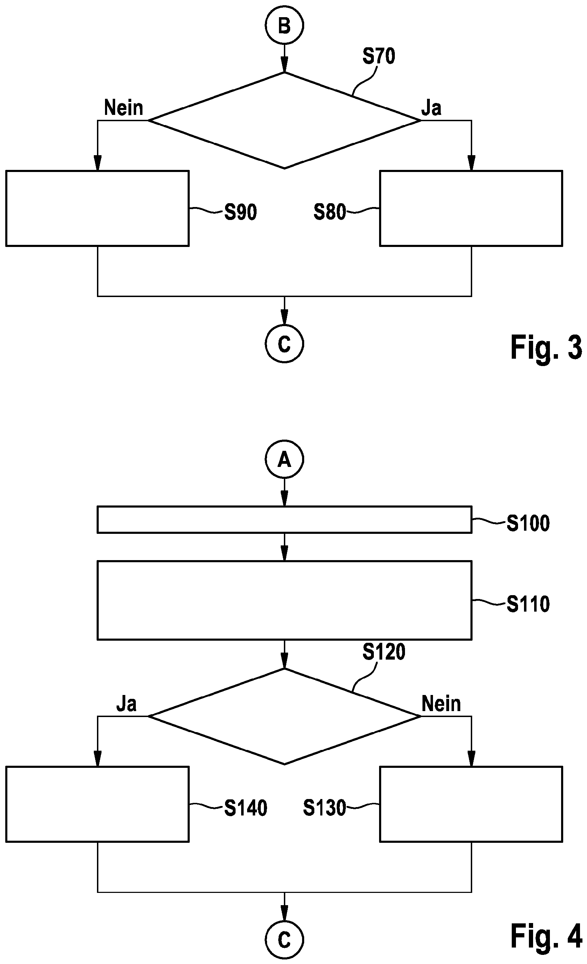

Wie aus Fig. 1 ersichtlich ist, wird in einem Schritt S10 überprüft, ob ein Resetvorgang und/oder ein Batteriewechsel vorliegt. Wird die Abfrage mit "Nein" beantwortet, dann wird das Verfahren mit einem Schritt S30 fortgesetzt. Wird die Abfrage mit "Ja" beantwortet, dann werden in einem Schritt S20 die Energiemanagementfunktionen 12.1 bis 12.4 deaktiviert. Im Schritt S30 wird zur Bestimmung des aktuellen Zustands der Batterie 40 mindestens ein Parameter erfasst und/oder ermittelt. Im Schritt S40 wird überprüft, ob die Zustandsvariable 24 gesetzt ist, welche die Gültigkeit der Werte des mindestens einen erfassten und/oder ermittelten Parameters repräsentiert. Ist die Zustandsvariable 24 gesetzt, dann verzweigt das Verfahren über die Verbindungspunkte A zu einem Schritt S100, welcher in Fig. 4 dargestellt ist. Ist die Zustandsvariable 24 nicht gesetzt, dann wird im Schritt S50 das Notenergiemanagement 26 aktiviert und im Schritt S60 wird der erfasste mindestens eine Parameter basierend auf mindestens einem Notgrenzwert und/oder mindestens einer Notbedingung ausgewertet. Nach dem Schritt S60 wird das Verfahren über die Verbindungspunkte B mit dem Schritt S70 fortgesetzt, welcher in Fig. 3 dargestellt ist.

Wie aus Fig. 3 ersichtlich ist, wird im Schritt S70 überprüft, ob die Notgrenzwerte und/oder Notbedingungen erfüllt sind. Wird die Abfrage im Schritt S70 mit "Nein" beantwortet, dann wird im Schritt S90 die mindestens eine Energiemanagementfunktion 12.1 bis 12.4 deaktiviert, falls erforderlich. Anschließend kehrt das Verfahren über die Verbindungspunkte C zum Schritt S30 zurück, welcher in Fig. 2 dargestellt und oben bereits beschrieben ist. Wird die Abfrage im Schritt S70 mit "Ja" beantwortet, dann wird im Schritt S100 die mindestens eine Energiemanagementfunktion 12.1 bis 12.4 aktiviert. Anschließend kehrt das Verfahren ebenfalls über die Verbindungspunkte C zum Schritt S30 zurück, welcher in Fig. 2 dargestellt und oben bereits beschrieben ist.

Wie aus Fig. 4 ersichtlich ist, wird im Schritt S100 in Folge der positiven Antwort im Schritt S40 das Hauptenergiemanagement 22 aktiviert. Im Schritt S110 wird der erfasste mindestens eine Parameter basierend auf mindestens einem Hauptgrenzwert und/oder mindestens einer Hauptbedingung ausgewertet. Im Schritt S120 wird überprüft, ob die Hauptgrenzwerte und/oder Hauptbedingungen erfüllt sind. Wird die Abfrage im Schritt S120 mit "Nein" beantwortet, dann wird im Schritt S130 die mindestens eine Energiemanagementfunktion 12.1 bis 12.4 deaktiviert, falls erforderlich. Anschließend kehrt das Verfahren über die Verbindungspunkte C zum Schritt S30 zurück, welcher in Fig. 2 dargestellt und oben bereits beschrieben ist. Wird die Abfrage im Schritt S120 mit "Ja" beantwortet, dann wird im Schritt S140 die mindestens eine Energiemanagementfunktion 12.1 bis 12.4 aktiviert. Anschließend kehrt das Verfahren ebenfalls über die Verbindungspunkte C zum Schritt S30 zurück, welcher in Fig. 2 dargestellt und oben bereits beschrieben ist.

Die vorgegebenen Kriterien zum Verändern der Zustandsvariablen 24 umfassen beispielsweise mindestens eine Ruhephase mit einer vorgegebenen Zeitdauer und/oder eine vorgegebene Wartezeitspanne. Das Notenergiemanagement 26 schätzt beispielsweise einen aktuellen Ladezustand der Batterie 40 durch Auswerten einer gemessenen Ruhespannung ab und/oder ermittelt einen aktuellen Innenwiderstand der Batterie 40 nach einem starken Entlade- und/oder Ladehub während eines Kaltstarts und vergleicht die ermittelten Werte mit korrespondierenden Notgrenzwerten. Auf Grundlage des aktuellen Ladezustand der Batterie 40 und dem aktuellen Innenwiderstand der Batterie 40 führt das Notenergiemanagement 26 vorzugsweise eine Spannungsprädiktion durch, wobei das Notenergiemanagement 26 die mindestens eine Energiemanagementfunktion 12.1 bis 12.4 aktiviert, wenn ein prognostizierter Spannungseinbruch der Batterie 40 in einem zukünftigen Szenario einen vorgegebenen korrespondierenden Notgrenzwert unterschreitet. Des Weiteren wertet das Notenergiemanagement 26 im dargestellten Ausführungsbeispiel einen aktuellen Ladestrom aus und vergleicht ihn mit einem korrespondierenden Notgrenzwert. Auf Grundlage des aktuellen Ladestroms kann das Notenergiemanagement 26 eine Ladebilanz der Batterie 40 ermitteln und auswerten, wobei das Notenergiemanagement 26 die mindestens eine Energiemanagementfunktion 12.1 bis 12.4 aktiviert, wenn eine positive Ladebilanz ermittelt wird. Außerdem kann das Notenergiemanagement 26 die mindestens eine Energiemanagementfunktion 12.1 bis 12.4 mit eingeschränktem Funktionsumfang aktivieren.

Die frühzeitige Aktivierung von Energiemanagementfunktionen 12.1 bis 12.4 wird über ein zweigeteiltes Energiemanagement realisiert. So lange nur ungenaue Daten aus der Batteriezustandserkennung vorliegen, werden einfache Abfragen mit erhöhten Grenzwerten in Form von Notgrenzwerten und/oder Notbedingungen als zusätzlichen Sicherheitspuffer verwendet. Wenn dann im Anschluss an das Notenergiemanagement 26 die notwendigen Lernbedingungen zum Erreichen einer erhöhten Genauigkeit der Batteriezustandserkennung erfüllt worden sind, kann auf das Hauptenergiemanagement umgeschaltet werden, welches dem heutigen Stand der Technik entspricht.

In anderen Worten ausgedrückt, kann nach einem Resetvorgang bzw. einem Batteriewechsel ein erster Ladezustand der Batterie 40 auf Grund der gemessenen Ruhespannung ermittelt werden. Der erste Kaltstart nach dem Resetvorgang stellt einen Innenwiderstand der Batterie 40 zur Verfügung. Außerdem kann ein zu tiefer Spannungseinbruch beim ersten Motorstart verwendet werden, um die mindestens eine Energiemanagementfunktion 12.1 bis 12.4 erst einmal zu deaktivieren. Dieser erste Ladezustand und der Innenwiderstand der Batterie 40 können als Startpunkt des Notenergiemanagements 26 verstanden werden. Auf dieser Grundlage kann eine Spannungsprädiktion durchgeführt werden. Die verwendeten Notgrenzwerte werden jedoch mit einem Sicherheitspuffer versehen und nach oben angehoben, wodurch die mindestens eine Energiemanagementfunktion 12.1 bis 12.4 im Grenzfall früher deaktiviert wird. Als weitere Absicherung der Aktivierung der mindestens einen Energiemanagementfunktion 12.1 bis 12.4 kann der Ladestrom verwendet werden. Übersteigt dieser einen Notgrenzwert, dann wird die mindestens eine Energiemanagementfunktion 12.1 bis 12.4 deaktiviert, weil der Ladezustand der Batterie 40 als potentiell kritisch eingestuft wird. Schließlich wird während des Betriebs der mindestens einen Energiemanagementfunktion 12.1 bis 12.4 eine Stromintegration durchgeführt. Als Bedingung für die Aktivierung der mindestens einen Energiemanagementfunktion 12.1 bis 12.4 muss nach einem Motorstart eine positive Ladebilanz vorliegen. Auf diesem Weg wird sichergestellt, dass man nicht unter den ersten Ladezustand der Batterie 40 zum Zeitpunkt des Resetvorgangs bzw. unter den Ladezustand der Batterie 40 zu dem Zeitpunkt zurückfällt, an welchem die mindestens eine Energiemanagementfunktion 12.1 bis 12.4 zum ersten Mal aktiviert wurde. Wenn beispielsweise während einer Stopp-Phase der Start-Stopp-Funktion 12.1 aufgrund von Verbraucherlasten die Ladebilanz negativ wird, kann dies als Auslöser zum Widerstart des Fahrzeugmotors verwendet werden. Um keine zu kurzen Stopp-Phasen zu erhalten, kann während der Start-Stopp-Funktion 12.1 ein bestimmter positiver Ladungspuffer abgefragt werden, welcher erreicht werden muss, um einen Stopp zuzulassen. So kann sichergestellt werden, dass eine bestimmte Stopp-Länge bei einer typischen Verbraucherlast gewährleistet ist. Zudem sind weitere Abfragen bzw. Notbedingungen zur Absicherung des Notenergiemanagements möglich, z.B. kann die Stoppdauer während der Start-Stopp-Funktion 12.1 bezüglich Zeit und entnommener Ladung begrenzt werden.

Tabelle 1 fasst mögliche Notgrenzwerte und Hauptgrenzwerte für eine bestimmte Fahrzeugarchitektur mit einem 12V-Bordnetz und einem Blei-Säure-Akkumulator zusammen. Diese Grenzwerte müssen für verschiedene Batterien und Architekturen entsprechend angepasst werden.

**Tabelle 1: Beispiele für Notgrenzwerte und Hauptgrenzwerte**

| Signal | Notenergiemanagement ungenaue Datenbasis | Hauptenergiemanagement hohe Genauigkeit erreicht |
|---|---|---|
| Ladezustand | 80% | 70% |
| Spannungseinbruch während Motorstart | 8,0V | - |
| Spannungsprädiktion (hier Spannungseinbruch beim nächsten Motorstart) | 9V | 7,2V |
| Ladestrom | 30 A | - |
| Ladebilanz | positiv | - |

Ausführungsformen der vorliegenden Erfindung können als Schaltung, Vorrichtung, Verfahren, Datenverarbeitungsprogramm mit Programmcodemitteln und/oder als Computerprogrammprodukt realisiert werden. Entsprechend kann die vorliegende Erfindung vollständig als Hardware und/oder als Software und/oder als Kombination aus Hardware- und/oder Softwarekomponenten ausgeführt werden. Zudem kann die vorliegende Erfindung als Computerprogrammprodukt auf einem computernutzbaren Speichermedium mit computerlesbarem Programmcode ausgeführt werden, wobei verschiedene computerlesbare Speichermedien wie Festplatten, CD-ROMs, optische oder magnetische Speicherelemente usw. benutzt werden können.

Die computernutzbaren oder computerlesbaren Medien können beispielsweise elektronische, magnetische, optische, elektromagnetische Infrarot- oder Halbleitersysteme, Vorrichtungen, Geräte oder Verbreitungsmedien umfassen. Zudem können die computerlesbaren Medien eine elektrische Verbindung mit einer oder mehreren Leitungen, eine tragbare Computerdiskette, einen Speicher mit direktem Zugriff (RAM), einen Nur-Lese-Speicher (ROM), einen löschbaren und programmierbaren Nur-Lese-Speicher (EPROM oder Flashspeicher, eine optischen Leitung und eine tragbare CD-ROM umfassen. Das computernutzbare oder das computerlesbare Medium kann sogar Papier oder ein anderes geeignetes Medium sein, auf welchem das Programm geschrieben ist, und von welchem es, beispielsweise durch einen optischen Abtastvorgang des Papiers oder des anderen Mediums elektrisch erfassbar ist, dann kompiliert, interpretiert oder falls erforderlich auf andere Weise verarbeitet und dann im Computerspeicher gespeichert werden kann.

Durch Ausführungsformen der vorliegenden Erfindung kann in vorteilhafter Weise die Wartezeit bis zur Aktivierung von mindestens einer Energiemanagementfunktion nach dem Neuanklemmen der Batterie, d.h. nach einem Resetvorgang bzw. einem Batteriewechsel, durch das Notenergiemanagement deutlich reduziert werden.

## Patentansprüche

1. Verfahren zur Aktivierung von mindestens einer Energiemanagementfunktion in einem Fahrzeug in Abhängigkeit vom aktuellen Zustand einer Batterie (40), wobei mindestens ein Parameter zur Bestimmung des aktuellen Zustands der Batterie (40) erfasst und/oder ermittelt wird, wobei die Gültigkeit der Werte des mindestens einen erfassten und/oder ermittelten Parameters durch eine Zustandsvariable (24) repräsentiert wird, welche nach einem Resetvorgang und/oder Batteriewechsel auf einen Grundzustand eingestellt wird und in Abhängigkeit von vorgegebenen Kriterien von dem Grundzustand in einen Setzzustand verändert wird, wobei ein Hauptenergiemanagement (22) die mindestens eine Energiemanagementfunktion (12.1 bis 12.4) nur aktiviert, wenn die Zustandsvariable (24) den Setzzustand aufweist und der mindestens eine erfasste und/oder ermittelte Parameter einen korrespondierenden Hauptgrenzwert erreicht und/oder eine korrespondierende Hauptbedingung erfüllt, **gekennzeichnet durch** ein Notenergiemanagement (26), welches die mindestens eine Energiemanagementfunktion (12.1 bis 12.4) nur aktiviert, wenn die Zustandsvariable (24) den Grundzustand aufweist und der mindestens eine erfasste und/oder ermittelte Parameter einen korrespondierenden Notgrenzwert erreicht und/oder eine korrespondierende Notbedingung erfüllt, wobei die Notgrenzwerte höher als die Hauptgrenzwerte vorgegeben werden.

2. Verfahren nach Anspruch 1, **dadurch gekennzeichnet, dass** die vorgegebenen Kriterien zum Verändern der Zustandsvariablen (24) mindestens eine Ruhephase mit einer vorgegebenen Zeitdauer und/oder eine vorgegebene Wartezeitspanne umfassen.

3. Verfahren nach Anspruch 1 oder 2, **dadurch gekennzeichnet, dass** das Notenergiemanagement (26) einen aktuellen Ladezustand der Batterie (40) durch Auswerten einer gemessenen Ruhespannung abschätzt und/oder einen aktuellen Innenwiderstand der Batterie (40) nach einem starken Entlade- und/oder Ladehub während eines Kaltstarts ermittelt und mit korrespondierenden Notgrenzwerten vergleicht.

4. Verfahren nach Anspruch 3, **dadurch gekennzeichnet, dass** das Notenergiemanagement (26) auf Grundlage des aktuellen Ladezustand der Batterie (40) und dem aktuellen Innenwiderstand der Batterie (40) eine Spannungsprädiktion durchführt, wobei das Notenergiemanagement (26) die mindestens eine Energiemanagementfunktion (12.1 bis 12.4) aktiviert, wenn ein prognostizierter Spannungseinbruch der Batterie (40) in einem zukünftigen Szenario einen vorgegebenen korrespondierenden Notgrenzwert unterschreitet.

5. Verfahren nach einem der Ansprüche 1 bis 4, **dadurch gekennzeichnet, dass** das Notenergiemanagement (26) einen aktuellen Ladestrom auswertet und mit einem korrespondierenden Notgrenzwert vergleicht.

6. Verfahren nach Anspruch 5, **dadurch gekennzeichnet, dass** das Notenergiemanagement (26) auf Grundlage des aktuellen Ladestroms eine Ladebilanz der Batterie (40) ermittelt und auswertet, wobei das Notenergiemanagement (26) die mindestens eine Energiemanagementfunktion (12.1 bis 12.4) aktiviert, wenn eine positive Ladebilanz ermittelt wird.

7. Verfahren nach einem der Ansprüche 1 bis 6, **dadurch gekennzeichnet, dass** das Notenergiemanagement (26) die mindestens eine Energiemanagementfunktion (12.1 bis 12.4) mit eingeschränktem Funktionsumfang aktiviert.

8. Vorrichtung zur Aktivierung von mindestens einer Energiemanagementfunktion in einem Fahrzeug in Abhängigkeit vom aktuellen Zustand einer Batterie (40), insbesondere zur Durchführung des Verfahrens nach einem der Ansprüche 1 bis 7, mit mindestens einem Batteriesensor (30), welcher mindestens einen Parameter zur Bestimmung des aktuellen Zustands der Batterie (40) erfasst und/oder ermittelt, und einer Auswerte- und Steuereinheit (20), welche die Gültigkeit der Werte des mindestens einen erfassten und/oder ermittelten Parameters durch Auswerten einer Zustandsvariablen ermittelt, welche nach einem Resetvorgang und/oder Batteriewechsel auf einen Grundzustand einstellbar ist und in Abhängigkeit von vorgegebenen Kriterien von dem Grundzustand in einen Setzzustand veränderbar ist, wobei die Auswerte- und Steuereinheit (20) ein Hauptenergiemanagement (22) ausführt und die mindestens eine Energiemanagementfunktion (12.1 bis 12.4) nur aktiviert, wenn die Zustandsvariable (24) den Setzzustand aufweist und der mindestens eine erfasste und/oder ermittelte Parameter einen korrespondierenden Hauptgrenzwert erreicht und/oder eine korrespondierende Hauptbedingung erfüllt, **dadurch gekennzeichnet, dass** die Auswerte- und Steuereinheit (20) ein Notenergiemanagement (26) ausführt, welches die mindestens eine Energiemanagementfunktion (12.1 bis 12.4) nur aktiviert, wenn die Zustandsvariable (24) den Grundzustand aufweist und der mindestens eine erfasste und/oder ermittelte Parameter einen korrespondierenden Notgrenzwert erreicht und/oder eine korrespondierende Notbedingung erfüllt, wobei die Notgrenzwerte höher als die Hauptgrenzwerte vorgegeben sind.

9. Computerprogrammprodukt mit Programmcode, der auf einem maschinenlesbaren Träger gespeichert ist, zur Durchführung des Verfahrens nach einem der Ansprüche 1 bis 7, wenn das Programm durch eine Auswerte- und Steuereinheit (20) ausgeführt wird.

10. Datenverarbeitungsprogramm mit Programmcodemitteln zur Ausführung des Verfahrens nach einem der Ansprüche 1 bis 7 durch eine Auswerte- und Steuereinheit (20), wenn das Datenverarbeitungsprogramm durch die Auswerte- und Steuereinheit (20) abgearbeitet wird.

## Claims

1. Method for activating at least one energy management function in a vehicle as a function of the current state of a battery (40), wherein at least one parameter for determining the current state of the battery (40) is acquired and/or determined, wherein the validity of the values of the at least one acquired and/or determined parameter is represented by a state variable (24) which is set to a basic state after a reset process and/or change of battery and is changed from the basic state into a set state as a function of predefined criteria, wherein a main energy management system (22) activates the at least one energy management function (12.1 to 12.4) only if the state variable (24) has the set state, and the at least one acquired and/or determined parameter reaches a corresponding main limiting value and/or satisfies a corresponding main condition, **characterized by** an emergency energy management system (26) which activates the at least one energy management function (12.1 to 12.4) only if the state variable (24) has the basic state and the at least one acquired and/or determined parameter reaches a corresponding emergency limiting value and/or satisfies a corresponding emergency condition, wherein the emergency limiting values are predefined higher than the main limiting values.

2. Method according to Claim 1, **characterized in that** the predefined criteria for changing the state variables (24) comprise at least one quiescent phase with a predefined time period and/or one predefined waiting time period.

3. Method according to Claim 1 or 2, **characterized in that** the emergency energy management system (26) estimates a current state of charge of the battery (40) by evaluating a measured quiescent voltage and/or determines a current internal resistance of the battery (40) after a strong discharging swing and/or charging swing during a cold start and compares with corresponding emergency limiting values.

4. Method according to Claim 3, **characterized in that** the emergency energy management system (26) carries out a voltage prediction on the basis of the current state of charge of the battery (40) and the current internal resistance of the battery (40), wherein the emergency energy management system (26) activates the at least one energy management function (12.1 to 12.4) if a predicted voltage dip of the battery (40) in a future scenario undershoots a predefined corresponding emergency limiting value.

5. Method according to one of Claims 1 to 4, **characterized in that** the emergency energy management system (26) evaluates a current charging current and compares it with a corresponding emergency limiting value.

6. Method according to Claim 5, **characterized in that** the emergency energy management system (26) determines and evaluates a charge balance of the battery (40) on the basis of the current charging current, wherein the emergency energy management system (26) activates the at least one energy management function (12.1 to 12.4) if a positive charge balance is determined.

7. Method according to one of Claims 1 to 6, **characterized in that** the emergency energy management system (26) activates the at least one energy management function (12.1 to 12.4) with a limited functional scope.

8. Device for activating at least one energy management function in a vehicle as a function of the current state of a battery (40), in particular for carrying out the method according to one of Claims 1 to 7, having at least one battery sensor (30) which acquires and/or determines at least one parameter for determining the current state of the battery (40), and an evaluation and control unit (20) which determines the validity of the values of the at least one acquired and/or determined parameter by evaluating a state variable which can be set to a basic state after a reset process and/or change of battery and can be changed from the basic state into a set state as a function of predefined criteria, wherein the evaluation and control unit (20) implements a main energy management system (22) and activates the at least one energy management function (12.1 to 12.4) only if the state variable (24) has the set state, and the at least one acquired and/or determined parameter reaches a corresponding main limiting value and/or satisfies a corresponding main condition, **characterized in that** the evaluation and control unit (20) implements an emergency energy management system (26) which activates the at least one energy management function (12.1 to 12.4) only if the state variable (24) has the basic state, and the at least one acquired and/or determined parameter reaches a corresponding emergency limiting value and/or satisfies a corresponding emergency condition, wherein the emergency limiting values are predefined higher than the main limiting values.

9. Computer program product having program code which is stored on a machine-readable carrier, for carrying out the method according to one of Claims 1 to 7 when the program is executed by an evaluation and control unit (20).

10. Data-processing program with program code means for executing the method according to one of Claims 1 to 7 by means of an evaluation and control unit (20) when the data-processing program is processed by the evaluation and control unit (20).

## Revendications

1. Procédé pour l'activation d'au moins une fonction de gestion d'énergie dans un véhicule en fonction de l'état actuel d'une batterie (40), dans lequel au moins un paramètre pour la détermination de l'état actuel de la batterie (40) est détecté et/ou déterminé, dans lequel la validité des valeurs de l'au moins un paramètre détecté et/ou déterminé est représentée par une variable d'état (24) qui est réglée à un état de base après une opération de remise à zéro et/ou après un remplacement de la batterie et qui est modifiée en fonction de critères prédéfinis, de l'état de base à un état réglé, dans lequel une gestion d'énergie principale (22) n'active l'au moins une fonction de gestion d'énergie (12.1 à 12.4) que lorsque la variable d'état (24) présente l'état réglé et que l'au moins un paramètre détecté et/ou déterminé atteint une valeur limite principale correspondante et/ou satisfait à une condition principale correspondante, **caractérisé par** un système de gestion d'énergie de secours (26) qui n'active l'au moins une fonction de gestion d'énergie (12.1 à 12.4) que lorsque la variable d'état (24) présente l'état de base et que l'au moins un paramètre détecté et/ou déterminé atteint une valeur limite de secours correspondante et/ou satisfait à une condition de secours correspondante, dans lequel les valeurs limites de secours sont supérieures aux valeurs limites principales.

2. Procédé selon la revendication 1, **caractérisé en ce que** les critères prédéfinis pour la modification des variables d'état (24) comprennent au moins une phase de repos présentant une durée prédéfinie et/ou une période d'attente prédéfinie.

3. Procédé selon la revendication 1 ou 2, **caractérisé en ce que** la gestion d'énergie de secours (26) estime un état de charge actuel de la batterie (40) en évaluant une tension de repos mesurée et/ou détermine une résistance interne actuelle de la batterie (40) après une forte excursion de charge et/ou de décharge pendant un démarrage à froid et compare celle-ci à des valeurs limites de secours correspondantes.

4. Procédé selon la revendication 3, **caractérisé en ce que** la gestion d'énergie de secours (26) effectue une prédiction de tension sur la base de l'état de charge actuel de la batterie (40) et de la résistance interne actuelle de la batterie (40), dans lequel la gestion d'énergie de secours (26) active l'au moins une fonction de gestion d'énergie (12.1 à 12.4) lorsqu'une chute de tension prévue de la batterie (40) dans un scénario à venir s'abaisse en-dessous d'une valeur limite de secours correspondante prédéfinie.

5. Procédé selon l'une des revendications 1 à 4, **caractérisé en ce que** la gestion d'énergie de secours (26) évalue un courant de charge actuel et le compare à une valeur limite de secours correspondante.

6. Procédé selon la revendication 5, **caractérisé en ce que** la gestion d'énergie de secours (26) détermine et évalue un bilan de charge de la batterie (40) sur la base du courant de charge actuel, dans lequel la gestion d'énergie de secours (26) active l'au moins une fonction de gestion d'énergie (12.1 à 12.4) lorsqu'un bilan de charge positif est déterminé.

7. Procédé selon l'une des revendications 1 à 6, **caractérisé en ce que** la gestion d'énergie de secours (26) active l'au moins une fonction de gestion d'énergie (12.1 à 12.4) dans un domaine fonctionnel limité.

8. Dispositif pour l'activation d'au moins une fonction de gestion d'énergie dans un véhicule en fonction de l'état actuel d'une batterie (40), en particulier pour la mise en oeuvre du procédé selon l'une des revendications 1 à 7, comportant au moins un capteur de batterie (30) qui détecte et/ou détermine au moins un paramètre pour la détermination de l'état actuel de la batterie (40), et une unité d'évaluation et de commande (20) qui détermine la validité des valeurs de l'au moins un paramètre détecté et/ou déterminé en évaluant une variable d'état qui peut être réglée à un état de base après une opération de remise à zéro et/ou après un remplacement de la batterie et qui peut être modifiée en fonction de critères prédéfinis, de l'état de base à un état réglé, dans lequel l'unité d'évaluation et de commande (20) effectue une gestion d'énergie principale (22) et n'active l'au moins une fonction (12.1 à 12.4) de gestion énergétique que lorsque la variable d'état (24) présente l'état réglé et que l'au moins un paramètre détecté et/ou déterminé atteint une valeur limite principale correspondante et/ou satisfait à une condition principale correspondante,
**caractérisé en ce que** l'unité d'évaluation et de commande (20) exécute une gestion d'énergie de secours (26) qui n'active l'au moins une fonction (12.1 à 12.4) de gestion d'énergie que lorsque la variable d'état (24) présente l'état de base et que l'au moins un paramètre détecté et/ou déterminé atteint une valeur limite correspondante et/ou satisfait à une condition de secours correspondante, dans lequel les valeurs limites de secours sont supérieures aux valeurs limites principales.

9. Produit de programme d'ordinateur comportant un code de programme stocké sur un support lisible par machine pour la mise en oeuvre du procédé selon l'une des revendications 1 à 7 lorsque le programme est exécuté par une unité d'évaluation et de commande (20).

10. Programme de traitement de données comportant des moyens à code de programme pour la mise en oeuvre du procédé selon l'une des revendications 1 à 7 par une unité d'évaluation et de commande (20) lorsque le programme de traitement de données est exécuté par l'unité d'évaluation et de commande (20).
